# EUROPEAN PATENT SPECIFICATION

(11) **EP 1 194 990 B1**
(45) Date of publication and mention of the grant of the patent: **18.06.2003**
(21) Application number: 01942802.8
(22) Date of filing: 22.01.2001
(51) Int. Cl.: H02G 15/04, H02G 3/06

(54) **CABLE GLAND ASSEMBLIES**
ZUSAMMENBAUTEN VON STOPFBUCHSEN
ENSEMBLE PRESSE-ETOUPE

(30) Priority: 22.01.2000 GB 0001362
(43) Date of publication of application: 10.04.2002
(73) Proprietor: Hawke Cable Glands Limited, Lancashire OL7 0NA (GB)
(72) Inventor: JACKSON, Carl, Tameside SK16 4TP (GB)
(74) Representative: Goddard, David John
(86) International application number: GB0100233
(87) International publication number: WO01054245

(56) References cited:
- EP-A- 0 587 310
- EP-A- 0 604 117
- GB-A- 1 123 352
- GB-A- 1 382 981
- GB-A- 2 116 784

## Description

The invention relates to cable gland assemblies, and particularly to the earthing of cable gland assemblies. Such assemblies typically provide a seal and a mechanical and/or an electrical connection between a cable and a wall through which the cable passes. The invention also relates to an earth tag for cable gland assemblies.

The EP-A-0587310 discloses a cable gland assembly consisting essentially of an adaptor, a sleeve, a cap nut and a clamping arrangement. The adaptor and the sleeve are screwed together with the clamping arrangement effectively held captive therebetween, and the assembly is intended to be fastened to the wall of, say, a junction box into which the cable passes. Fastening the assembly involves inserting the adaptor through a hole in a wall and tightening a nut on the threaded end of the adaptor after insertion by relative rotation of the assembly and the nut.

The GB-A-2116784 discloses a cable gland earth tag which is fastened to the cable gland assembly, for instance between the adaptor and the wall through which the adaptor extends, to provide an earth connection. The tag disclosed essentially comprises a laminar body having an apertured portion, a part of the assembly being received in the aperture, and an outwardly extending portion to which an earth connection is attached. A seal is located in the aperture to prevent fluid entering the assembly around the tag. In its resting state the seal projects laterally of the tag. On fastening the assembly at installation, the tag is clamped between the adaptor and the wall and the seal is compressed so as to be forced radially of the aperture into sealing contact with the assembly. The clamping on fastening the assembly also brings the adaptor and the body of the tag into contact thereby providing an electrical connection from the assembly to earth.

A problem with the earth tags of the type disclosed in GB-A-2116784 is that they may be urged to rotate on fastening the assembly as a result of the relative rotating motion which is involved. The rotation of the tag may result in its misplacement and hinder its installation, not least because several assemblies are often installed in close proximity and the tag needs to maintain its position in order not to interfere with other adjacent assemblies and for easy attachment of an earth connection.

GB 1 382 981 discloses a cable gland assembly according to the preamble of claim 1. The solution to the above mentioned problem resides in the characterising part of claim 1.

Preferably, the means for opposing rotation promotes an electrical connection between the assembly and the tag.

The tag projection may be of any shape or form which enables them to serve their function of rotation opposing means, and the projections may be resiliently urged away from the tag, for instance spring loaded, or made from a compressible material whether resiliently compressible or not. Further preferably, each tab-like piece is resiliently urged laterally of the tag. The tag may be provided with means for holding the tag on an assembly part prior to clamping.

Additionally preferably, the tag is provided with means for sealing between the body of the tag and a part or parts of the assembly or the wall. The sealing means may comprise a sealing ring located in the aperture. The sealing ring may be provided with means for holding the tag on an assembly part prior to clamping. The holding means may comprise a plurality of generally curved projections distributed around the radially inner face of the sealing ring.

The assembly preferably further comprises means for the attachment of an earthing connection.

The invention will now be described, by way of example, with reference to the following drawings, in which;
Figure 1 is a partial cross sectional view of a cable gland assembly according to an embodiment of the invention; and
Figure 2 is a perspective view of an earth tag for an assembly according to the invention.

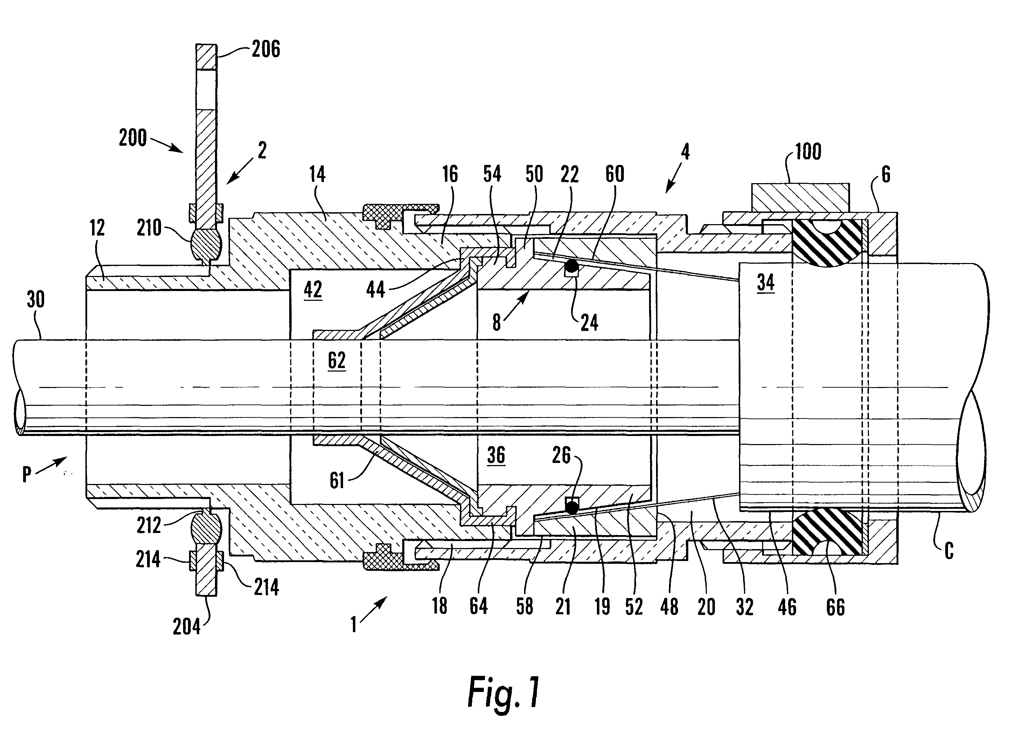

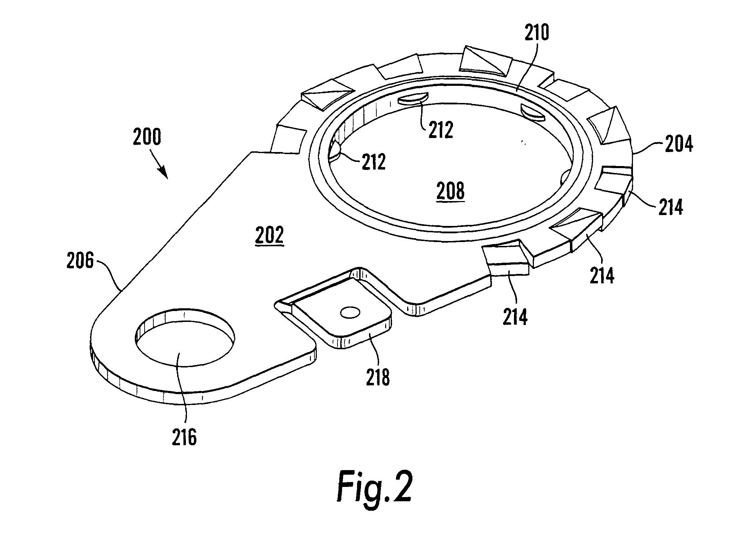

With reference to figures 1 and 2, a cable gland assembly indicated generally at 1 consists essentially of four parts: an adaptor 2, a sleeve 4, a cap nut 6, all made from brass, and a clamping arrangement 8. The four generally cylindrical parts 2, 4, 6, 8 together define a central passageway P for a cable C.

The adaptor 2 has a radially extending flange 14 which is partly hexagonally shaped for a spanner. To one side of the flange 14 the adaptor 2 has an externally threaded entry portion 12 for insertion through a hole in the wall of, say, a junction box (not shown). The adaptor 2 is fastened to the wall with a nut (not shown) screwed on to the entry portion 12 after insertion. To the other side of the flange 14, the adaptor 2 has an externally threaded attachment portion 16, which is of larger diameter than the entry portion 12. The adaptor 2 has a multiply stepped bore 42, which gradually decreases in diameter towards the entry portion end, and the step nearest the attachment portion end provides a shoulder 44. A rubber diaphragm seal 61 with a central opening 62 capable of expanding to accommodate various different diameters of cable has an annular retaining ring 64 which is seated against the shoulder 44.

The sleeve 4 has at one end an internal thread 18 for engagement with the thread on the attachment portion 16 of the adaptor 2. At its opposite end 20, the sleeve 4 is externally threaded to receive the cap nut 6. The sleeve 4 has a bore 46 with a step approximately at its midpoint which provides a shoulder 48.

The clamping arrangement 8 comprises first and second clamping parts 19, 21 which together define a cable armour clamping gap 22 therebetween. Extending into the gap 22 from an annular recess 24 in the first clamping part is cable armour engaging means 26.

The cable C comprises inner conducting wires surrounded sequentially by an inner insulating sheath 30, armour wires 32 and an outer insulating sheath 34. The armour wires 32 are exposed as a result of the stripping back of the insulating sheath 34 which needs to extend only sufficiently into the passageway P to establish a seal.

The first clamping part 19 is constituted by a spigot having a central bore 36 of a size greater than the diameter of the cable C in the region where it has been stripped back. The spigot 19 is divided by a radially extending flange 50 into a clamping portion 52 of frusto-conical shape and a substantially cylindrical sealing portion 54 which is a close tolerance fit in the retaining ring 64 of the seal 61.

The second clamping part 21 is constituted by a clamping ring having a cylindrical outer surface 58 and a central bore which is tapered in a manner complimentary to the shape of the clamping portion 52 of the spigot 19, but of larger diameter. As a result, when the spigot 19 and the clamping ring 56 are fitted together, the interior surface 60 of the clamping ring 21 and the exterior surface of the clamping portion 52 have a substantially parallel relationship. The clamping ring 21 is a close tolerance fit in the bore 46 of the sleeve 4, abutting against the shoulder 48.

The cable armour clamping means 26 is constituted by a resiliently compliant split, metal o-ring received in the annular recess 24. In its normal state, the o-ring 26 is of such a diameter that it will extend out of the recess 24 and into the gap 22, but is capable of complying, that is, compressing, in terms of its diameter decreasing, to the extent that it can recede completely into the recess 24 and no part of it any longer extends into the gap 22. The o-ring 26 is resilient in that its reaction to compression is to attempt to return to its normal state diameter.

The effect of screwing the sleeve 8 and the adaptor 2 together is to urge the clamping ring 21 axially towards the spigot 19 thereby to close the clamping gap 22 and to clamp the armour wires 32 between the spigot 19 and the clamping ring 21. The split o-ring 26 will compress according to the thickness of the wires 32, and its reaction to compressing will be to exert a clamping force on the wires 32. The wires 32 may be of such a thickness that a suitable clamping gap is attained before the axially forward end of the clamping ring 21 reaches the flange 50 of the spigot 19, in which case the o-ring 26 will comply to the extent of receding completely into the recess 24. On the other hand, and as specifically shown in figure 1, the wires 32 may be thinner than even the minimum clamping gap attainable (determined by the relative dimensions of the spigot 19 and the clamping ring 21), in which case, the o-ring 26 is compressed only sufficiently to permit the accommodation of the wire 32, and the reaction force the o-ring 26 exerts clamps the wires 32 against the clamping ring 21.

An annular seal 66 is disposed between the cap nut 6 and the sleeve 4, and the effect of screwing the cap nut 6 on to the sleeve 4 is to radially compress the seal 66 against the cable C.

Fixed to the outer surface of the cap nut 6, with high performance adhesive, is a generally disc-shaped transponder 100. Suitable transponders are manufactured by the AEG company under their designations ID300 and ID700. The transponder 100 has an information storage facility (not shown) for storing information, such as a unique identity code for the assembly, data relevant to its last inspection etc. Typically, the transponder 100 is capable of storing eighty bits of information. The information may be read from the storage facility.

The information storage facility of the transponder 100 is divided into two portions. A first portion containing a unique code for the assembly 1 including identification of its type, model number, cable size acceptance, certification references (that is, the standards which it is certified to fulfil) and performance limits. This information is hand written into the first portion at about the time the transponder 100 is incorporated into the assembly and may not easily be erased or altered, at least, not in the field. The second portion of the storage facility is field programmable to facilitate the storage in the memory of information such as inspection status, last inspection date and site reference, which needs to be updated periodically.

With reference also to figure 2, an earth tag 200 essentially comprises a laminar body 202 having an apertured portion 204 and an outwardly extending portion 206. The tag 200 has additional means 218 for connection of earthing means.

The apertured portion 204 has an aperture 208 for receiving a part of the cable gland assembly 1. Located in the aperture 208, seated against the cylindrical surface 212 which defines the aperture 208, is a sealing ring 210. Captivating pips 212, which comprise curved projections, are evenly distributed around the radially innermost face of the sealing ring 210. Distributed around the aperture 208, apart from in the region where the apertured portion 204 adjoins the outwardly extending portion 206, are a plurality of tabs 214 which project laterally of the tag 200. Each tab 214 is formed by separating a rectangular piece of the apertured portion 204 on three sides from the remainder of the apertured portion. Each tab 214 is then bent at its remaining, fourth side, so as to be inclined at an angle with respect to the remainder of the body of the apertured portion 204 and to project laterally of the tag 200. The tabs 214 are alternately bent so that each tab 214 projects in the oppostite lateral direction to each adjacent tab 214.

The outwardly extending portion 206 is provided with a hole for receiving an earthed bolt (not shown) and a shaped part for providing a 'fast-on' earthed tab as an alternative.

The cable gland assembly 1 is supplied with the earth tag pre-installed. That is to say, the insertion portion 12 of the adaptor 2 is inserted through the aperture 208, and the captivating pips 212, which are sized to engage the insertion portion 12, hold the tag 200 on the assembly 1 and prevent it from sliding off the adaptor 2 prior to installation of the assembly 1.

On installation of the assembly 1, the earth tag 200 is clamped between the wall (not shown) through which the insertion portion 12 is inserted and the flange 14. On tightening the assembly 1, which, as aforementioned, involves screwing together the assembly 1 and a nut on the remote side of the wall, the tag 200 is squeezed between the wall and the flange 14 respectively. The first parts of the tag 200 to contact the wall and the flange 14 respectively are the tabs 214. As a result of being bent, the tabs 214 are spring loaded and resiliently urged in the direction of the wall and the flange 14, which promotes a good electrical connection between the wall, the assembly 1 and the tag 200. However, because the urging is resilient in nature, further tightening of the assembly simply forces the tabs 214 back towards a position at which they are coplanar with the remainder of the body of the tag 200. Tightening the assembly 1 also causes the sealing ring 210 to perform in the manner described in GB-A-2116784.

The relative rotating motion involved in fastening the assembly 1 to the wall tends to urge the tag 200 to rotate. However, the contact between the tabs 214 and the wall and the flange 14 respectively generates frictional forces which oppose the tendency to rotate, hence the tag 200 maintains its position. The frictional forces are maximised by arranging each tab with its longitudinal axis, that is the axis extending through the bent side and the opposite side, tangential to the aperture, so that the full length of the opposite side's edge interfaces with the flange 14 or wall as appropriate.

## Claims

1. A cable gland assembly (1) comprising parts providing a mechanical and/or electrical connection between a cable and a wall and a tag (200) which is fastened by clamping between a part of said assembly and another part of said assembly or the wall thereby to provide a connection to earth from the assembly wherein the tag has an aperture (208) through which a part of the assembly is received and means (214) for opposing rotation of the tag about a part of the assembly during clamping **characterised in that** the means for opposing rotation are distributed around or partly around the aperture and comprise a plurality of projections, each projection comprising a tab-like piece (214) of the tag body (204) which is angled to project laterally of the tag.

2. A cable gland assembly according to claim 1 wherein each projection is resiliently urged laterally of the tag.

3. A cable gland assembly according to either claim 1 or claim 2 wherein the tag is provided with means (212) for holding the tag on a part of the assembly prior to clamping.

4. A cable gland assembly according to any one preceding claim wherein the tag is provided with means (210) for sealing between the tag and a part or parts of the assembly or the wall.

5. A cable gland assembly according to claim 4 wherein the sealing means comprises a sealing ring (210) located in the aperture.

6. A cable gland assembly according to claim 5 wherein the sealing ring is provided with means (212) for holding the tag on a part of the assembly prior to clamping.

7. A cable gland assembly according to claim 6 wherein the holding means may comprise a plurality of generally curved projections (212) distributed around the radially inner face of the sealing ring.

8. A cable gland assembly according to claim 1 wherein said tab-like projections for opposing rotation promote an electrical connection between the assembly and the tag.

9. A tag for a cable gland assembly according to any one preceding claim.

10. A tag according to claim 9 having additional means (218) for connection of earthing means.

## Patentansprüche

1. Kabeldurchführungsanordnung (1) mit Teilen, die eine mechanische und/oder elektrische Verbindung zwischen einem Kabel und einer Wand bilden, und mit einer Lasche (200), die durch Einklemmen zwischen einem Teil der Anordnung und einem anderen Teil der Anordnung oder der Wand befestigt wird, um dadurch eine Erdverbindung von der Anordnung aus bereitzustellen, wobei die Lasche eine Öffnung (208), durch die ein Teil der Anordnung aufgenommen ist, und Mittel (214) aufweist, die einer Verdrehung der Lasche um einen Teil der Anordnung während des Einklemmens entgegenwirken, **dadurch gekennzeichnet, daß** die einer Verdrehung entgegenwirkenden Mittel um oder teilweise um die Öffnung herum verteilt sind und eine Vielzahl von Vorsprüngen aufweisen, wobei jeder Vorsprung ein streifenartiges Stück (214) des Laschenkörpers (204) umfaßt, das so abgewinkelt ist, daß es seitlich von der Lasche vorsteht.

2. Kabeldurchführungsanordnung nach Anspruch 1, bei der jeder Vorsprung seitlich von der Lasche federnd ausgestellt ist.

3. Kabeldurchführungsanordnung nach Anspruch 1 oder Anspruch 2, bei der die Lasche mit Mitteln (212) zum Halten der Lasche auf einem Teil der Anordnung vor dem Einklemmen versehen ist.

4. Kabeldurchführungsanordnung nach einem vorhergehenden Anspruch, bei der die Lasche mit Mitteln (210) zum Abdichten zwischen der Lasche und einem Teil oder Teilen der Anordnung oder der Wand versehen ist.

5. Kabeldurchführungsanordnung nach Anspruch 4, bei der die Dichtmittel einen in der Öffnung sitzenden Dichtungsring (210) umfassen.

6. Kabeldurchführungsanordnung nach Anspruch 5, bei der der Dichtungsring mit Mitteln (212) zum Halten der Lasche auf einem Teil der Anordnung vor dem Einklemmen versehen ist.

7. Kabeldurchführungsanordnung nach Anspruch 6, bei der die Haltemittel eine Vielzahl allgemein bogenförmiger Vorsprünge (212) umfassen können, die um die Radialinnenfläche des Dichtungsringes herum verteilt sind.

8. Kabeldurchführungsanordnung nach Anspruch 1, bei der die einer Verdrehung entgegenwirkenden streifenartigen Vorsprünge eine elektrische Verbindung zwischen der Anordnung und der Lasche begünstigen.

9. Lasche für eine Kabeldurchführungsanordnung nach einem vorhergehenden Anspruch.

10. Lasche nach Anspruch 9 mit zusätzlichen Mitteln (218) zum Anschluß von Erdungsmitteln.

## Revendications

1. Ensemble presse-étoupe (1) comprenant des parties fournissant une connexion mécanique et/ou électrique entre un câble et une paroi et une étiquette (200) qui est attachée par blocage entre une partie dudit ensemble et une autre partie dudit ensemble ou de la paroi fournissant de cette façon une connexion à la terre de l'ensemble, **caractérisé en ce que** l'étiquette a une ouverture (208) à travers laquelle une partie de l'ensemble est reçu et des moyens (214) pour s'opposer à la rotation de l'étiquette autour d'une partie de l'ensemble durant le blocage, **caractérisé en ce que** les moyens pour s'opposer à la rotation sont distribués autour ou partiellement autour de l'ouverture et comporte une pluralité de projections, chaque projection comprenant une pièce en forme d'étiquette (214) du corps de l'étiquette (204) qui présente un angle se projetant latéralement de l'étiquette.

2. Ensemble presse-étoupe selon la revendication 1, **caractérisé en ce que** chaque projection est de manière résiliente située préférentiellement latéralement par rapport à l'étiquette.

3. Ensemble presse-étoupe selon l'une des revendications 1 ou 2, **caractérisé en ce que** l'étiquette est pourvue des moyens (212) pour porter l'étiquette sur une partie de l'ensemble avant le blocage.

4. Ensemble presse-étoupe selon l'une des revendications précédentes, **caractérisé en ce que** l'étiquette est pourvue de moyens (210) pour l'étanchéïfication entre l'étiquette et une partie ou des parties de l'ensemble ou de la paroi.

5. Ensemble presse-étoupe selon la revendication 4, **caractérisé en ce que** les moyens d'étanchéïfication comprennent une bague de joint (210) disposée dans l'ouverture.

6. Ensemble presse-étoupe selon la revendication 5, **caractérisé en ce que** la bague de joint est pourvue de moyens (212) pour porter l'étiquette sur une partie de l'ensemble avant le blocage.

7. Ensemble presse-étoupe selon la revendication 6, **caractérisé en ce que** les moyens de portage peuvent comprendre une pluralité de projections généralement courbées (212) distribuée autour de la face radialement intérieure de la bague de joint.

8. Ensemble presse-étoupe selon la revendication 1, **caractérisé en ce que** lesdites projections en forme d'étiquette s'opposant à la rotation encouragent une connexion électrique entre l'ensemble et l'étiquette.

9. Etiquette pour un ensemble presse-étoupe selon l'une des revendications précédentes.

10. Etiquette selon la revendication 9 ayant des moyens supplémentaires (218) pour la connexion de moyens de mise à terre.
